# EUROPEAN PATENT APPLICATION

(11) **EP 4 632 893 A1**
(43) Date of publication of application: **15.10.2025**
(21) Application number: 24169223.5
(22) Date of filing: 09.04.2024
(51) Int. Cl.: H01M 50/184, H01M 50/186, H01M 50/193, H01M 50/198, H01M 50/572, H01M 50/109

(54) **FUSED BUTTON BATTERY**

(71) Applicant: Rijksuniversiteit Groningen, 9712 CP Groningen (NL); Academisch Ziekenhuis Groningen, 9713 GZ Groningen (NL); Technische Universiteit Delft, 2628 CN Delft (NL)
(72) Inventor: OOMS, Fransiscus Guntherus Bernardus, 2600 AA Delft (NL); DIKKERS, Frederik Gerhard, 9713 GZ Groningen (NL); EBELS, Tjark, 9713 GZ Groningen (NL); FRIJLINK, Henderik Willem, 9713 AV Groningen (NL); WAGEMAKER, Marnix, 2600 AA Delft (NL); EISSENS, Anko Cornelus, 9713 AV Groningen (NL)
(74) Representative: Patent Business B.V.

(57) **Abstract**

The present invention relates to a single cell cylindrical battery, such as a button cell or a button battery, that can be regarded to have the shape of a slice of a cylinder, and to a method preventing upper digestive and upper respiratory tract injury after accidental ingestion of the single cell cylindrical battery. It is noted that in some case ingestion has even led to the death in particular of children or small size adults, or people with a mental limitation, or people with a prior narrowing of structures in which the battery can be lodged. The structures in which the battery can be lodged are both the pharyngeal, upper digestive and upper respiratory tracts. As ingestion itself can not always be prevented, a relatively safe battery has been developed, which mitigates problems associated with ingestion.

## Description

### FIELD OF THE INVENTION

The present invention relates to a single cell cylindrical battery, such as a button cell, or a button battery, or a watch battery, that can be regarded to have the shape of a slice of a cylinder, and to a method preventing upper digestive tract injury after accidental ingestion of the single cell cylindrical battery. It is noted that in some case ingestion has even led to the death in particular of children or small size adults, or people with a mental limitation or people with a prior narrowing of structures in which the battery can be lodged. The structures in which the battery can be lodged are both the digestive and upper respiratory tracts. As ingestion itself can not always be prevented, a relatively safer battery has been developed, which mitigates problems associated with ingestion.

### BACKGROUND OF THE INVENTION

The invention is in the field of a single cell cylindrical battery, also referred to as a watch battery, coin cell, or a button cell. Typically, it relates to a small cell shaped as a typically short cylinder. A diameter thereof is typically limited to 5 to 25 mm whereas a height typically is 1 to 6 mm, hence relatively small objects. Button cells with relatively larger diameters are typically referred to as coin cells. Primary and secondary button batteries comprise an electrochemical stack typically enclosed by a metal casing. A typical casing comprises a metal bottom can and a metal top cap which are electrically isolated from each other, such as by a polymer gasket. The bottom casing is typically crimped or deformed around the cap in the manufacturing process resulting in a tight seal. Typically, the internal surfaces of the can and cap are connected to the cathode electrode and the anode electrode of the electrochemical stack, respectively, and therefore may be considered to act as the positive and negative terminal of the button cell. Typically, these internal contacts are established by the pressure resulting from the deformation and the manufacturing process. As other batteries, button cells can be used to provide electronics devices with power, typically relatively small electronic devices. Most button cells have low self-discharge and hold their charge for a long time if not used.

Button cells may be considered as primary cells, which unfortunately are usually disposable primary cells, as opposed to secondary cells that can be reversible charged/discharged. Common anode materials are zinc or lithium. Common cathode materials are manganese dioxide, silver oxide, carbon monofluoride, cupric oxide or oxygen from the air. Relatively high-power devices may use a zinc-air battery which have much higher capacity for a given size.

Cells are typically mechanically interchangeable, but some cells are designed to be fixed permanently within electronic devices. However, voltage, amperage, power output may vary significantly. In view of intended use cells are optimised for different loads, such as by using different electrolytes.

Button cells are found to be potentially very dangerous in particular for aforementioned categories of people. Button cells that are swallowed can result in severe damage of vital organs that may result in serious and permanent injury or even death. In this respect reference can be made to Voelker J, et al., "Severe tracheobronchial harm due to lithium button battery aspiration: An in vitro study of the pathomechanism and injury pattern.", Int. J. Pedi-atr. Otorhinolaryngol. 2020 Dec;139:110431, and Jatana KR, et al., "Button battery safety: industry and academic partnerships to drive change.", Otolaryngol Clin North Am. 2019;52:149-161. Basic mechanisms of such injury have been described in Jatana KR, Rhoades K, Milkovich S, Jacobs IN. Basic mechanism of button battery ingestion injuries and novel mitigation strategies after diagnosis and removal. Laryngoscope. 2017 Jun;127(6): 1276-1282. Reference may also be made to P. Doekes in "Button battery induced oesophageal lesions: how and when?", M.Sc. thesis, R.U. Groningen, July 2015.

Some documents relate to discouraging children from ingesting batteries, such as having batteries with unpleasant taste, or unpleasant colour. Some button batteries may be provided with an adhesive sticker as a warning and/or for preventing a short-circuit by sealing of one or both of the electrodes. This may prevent some accidents from happening in the first place and the latter only functions for new (non-used) batteries. Experiments demonstrate that this yields a deceptive sense of security, as the seal of the stickers is never electrically complete.

Some documents recite button cells with a coil electrode with thermal securing. For instance, EP 3252843 A1 recites a button cell which comprises a housing, an electrode-separator assembly, and metallic diverters, which electrically connect the at least one positive electrode and the at least one negative electrode to one of the housing halves each, and at least one of the diverters is provided with a thermal fuse, which respond to a temperature difference rather than to an electric short-cut.

Some documents recite fuses to prevent thermal explosions. And some documents provide materials that change electrical properties, in that a conductive path is transferred into a non-conducting path, e.g., from a stress to a non-stress status. And some further documents recite fuses in battery-systems, in order to prevent too strong currents in said system as a whole.

Some documents refer to fused batteries. For instance, US 2013/202922 A1 recites a polymer-fused battery including a casing, an anode coupled to the casing, an electrical source disposed between the casing and the anode, and a fuse over at least a portion of the anode. The polymer fuse comprises an electrically-conductive material formulated to decompose upon contact with a bodily fluid and to provide electrical communication between the anode cap and the electrical source when the polymer fuse is intact. And EP 3 588 622 A1 recites a disc fuse including an electrically insulating substrate having a via formed therethrough extending between a first surface and a second surface of the substrate, an electrically conductive first terminal disposed on the first surface of the substrate, and an electrically conductive second terminal disposed on the second surface of the substrate, the second terminal including an outer portion having an inner edge defining a through-hole in the second terminal, the second terminal further including a fuse portion extending from the inner edge, the fuse portion comprising a fusible element terminating in a contact pad, wherein the substrate provides an electrically insulating barrier between the first terminal and the second terminal and wherein the via provides an electrical connection between the first terminal and the contact pad.

Therefore, there is a need for an improved single cell cylindrical battery.

The present invention therefore relates to a single cell cylindrical battery and further aspects thereof, which overcomes one or more of the above disadvantages, without compromising functionality and advantages.

### SUMMARY OF THE INVENTION

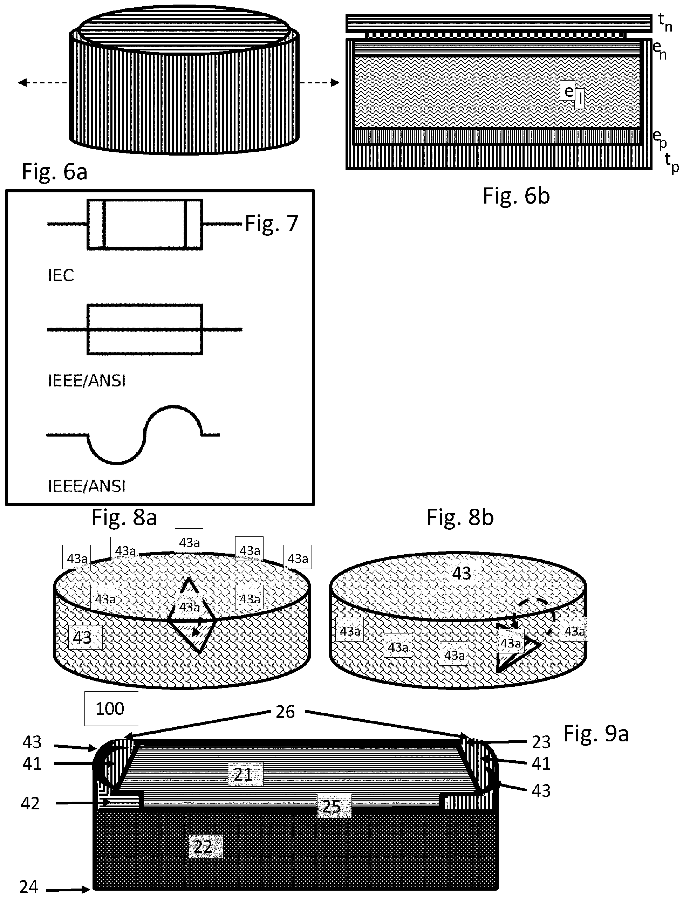

It is an object of the invention to overcome one or more limitations of a single cell cylindrical battery of the prior art and at the very least to provide an alternative thereto. In a first aspect the present invention relates to a gasket for such a single cell cylindrical battery. In the present case, a gasket typically relates to a mechanical seal which fills the space between the cap and the can, or top and bottom part, of a battery. It is intended to prevent leakage from or into the joined objects, that is, the electrolyte and so on. Typically, the electrolyte and contents of the battery are practically not under too much over-pressure. The gasket is typically made of a deformable dielectric material that is used to create a static seal and maintain that seal under various operating conditions in a mechanical assembly. In addition, therewith gaskets provide increased tolerances between cap and can such as by filling irregularities. Gaskets can be provided as flat material, from different materials, in the present case typically selected from natural and synthetic polymers, rubbers, silicones, neoprenes, and nitrile rubbers. The present invention relates in a first aspect to a gasket, 26 for a said single cell cylindrical battery, comprising at least one first dielectric material 41, wherein said at least one first dielectric material is configured to provide sealing, characterized in that the at least one first dielectric material 41 is soluble in water at 37 °C and 100 kPa, and at least one switchable electrical conductor 43 configured for providing contact between opposite terminals of the said single cell cylindrical battery in an active state, and configured for preventing contact between opposite terminals of the said single cell cylindrical battery in a passive state, wherein the conductive material is configured to be reversibly flexed, and is incorporated at least partly in said at least one first dielectric material. It is noted that the at least one first dielectric material 41 is soluble in water at 37±5 °C and 100±10 kPa, that is, under typical circumstances, in particular after accidental ingestion. The electrical conductor is configured to be tensioned in a direction of the opposite electrical pole (terminal) in view of the pole to which it is attached, if so, or in a direction of both poles, so as to make contact between the poles when released by dissolution of the first dielectric material. Such tensioning may be in a substantially horizontal direction, and/or in a substantially vertical direction, and/or in a substantially 3-dimensional direction. For instance, when one first dielectric material 41 dissolves switchable electrical conductor may move upwards (with reference to e.g. figs. 9a-c). In a mechanical equivalent, the switchable electrical conductor may revert to a smaller configuration, e.g. shrink, and therewith contact cap and can electrically. Typically, the electrical conductor is provided over a substantial part of the (internal) circumference, or periphery, of the respective terminal or in between said terminals, in particular over 50-100% of the circumference, more in particular over 70-99% of the circumference, such as over 90-95% of the circumference. It has been found that dissolution of the present at least one first dielectric material is at least partly a matter of chance, in that it is not clear beforehand how e.g. a single cell battery will end up/be positioned after accidental ingestion. It is therefore not clear which part of the at least one first dielectric is most prone to dissolution. And, therefore it is not known which part of the present electrical conductor will provide contact between opposite terminals. In order to secure functionality in this respect the present electrical conductor is provided over a substantial part of the circumference, such as in the form of a ring, or cylinder, or part thereof. The solubility is typically > 10 gr first dielectric material/0.1 dm³, such as >20 gr first dielectric material/0.1 dm³, and the first dielectric material typically also dissolves rather quickly, that is, within 10-240 seconds per gram. The present gasket is in particular designed to comprise the at least one switchable electrical conductor in a passive state when the said battery is in normal use, e.g., in an apparatus providing electrical power, and to be in an active state, that is, providing contact between opposite terminals of the said single cell cylindrical battery such that an electrical current largely or fully flows through said at least one switchable electrical conductor. More important, in view of the electrical resistance of the saliva and the electrical conductivity of the present electrical conductor, almost all of the current (>90%, and most likely > 99%) is expected to run through the electrical conductor, rather than through the saliva or the like, therewith largely or fully preventing damage, such as to the digestive tract. Such is amongst others achieved by the ability of the electrical conductor to switch between the passive and active state, such as by putting the conductor under flexural tension. One may regard the present at least one switchable electrical conductor to relate to a memory material, that is, it is put in a passive sate by flexing for instance, and, due to its memory, its flexes back into an active state. The modulus of elasticity of a material is related to a mechanical property of rigidity or stiffness and is defined as the ratio between the stress applied and the elastic strain it produces. Young's modulus (E) describes tensile and compressive elasticity, or the tendency of an object to deform along an axis when opposing forces are applied along that axis; it is defined as the ratio of tensile stress to tensile strain. It is often referred to simply as the elastic modulus. Flexural modulus (Eflex) describes the object's tendency to flex when acted upon by a moment (according to e.g., ASTM E111-17; ASTM E8/E8M and ISO 6892-1). The present switchable electrical conductor typically has a modulus of elasticity (E) of 30-300 GPa, in particular 80-250 GPa, more in particular 100-220 GPa, and/or a Yield stress (σ) of 50-200 MPa, in particular 70-130 MPa, more in particular 90-110 MPa, and/or a flexural modulus of 30-100 MPa, in particular 40-75 MPa, more in particular 50-65 MPa, The gasket is designed to at least partly dissolve in water, therewith liberating the electrical conductor, and allowing it to switch from passive to active, that is, e.g. releasing the flexural tension. In an embodiment the at least one first dielectric material is configured to provide sealing. If only one dielectric material is provided, typically the at least one first dielectric material provides substantially full sealing, such as from environmental influence on the battery and to prevent leakage of the contents of the battery. Therewith the present gasket, and likewise the present battery and the present method, provide a solution to the disadvantages of the prior art, and in particular prevent ingested batteries from causing injuries or death.

It is noted that typically saliva solubility can be taken to be similar to water solubility; the saliva may in certain cases provide a better solubility in view of components present in the saliva, such as enzymes. The solubility of the saliva soluble first dielectric material, typically a polymer, is preferably > 0.01 mole/l (@ 273 K), more preferably > 0.1 mole/l, such as 0.5-10 mole/l. The energy of dissolution ΔG (273 K) is preferably relatively small, such as < 20 kJ/mole. The polymer is preferably non-toxic. The dissolution into the watery saliva is typically quick. Typically, the first dielectric material is accessible from the outside by at least one opening.

In a second aspect the present invention relates to a single cell cylindrical battery 100, in particular a button cell or a button battery, or a watch battery, the single cell cylindrical battery comprising at least one first terminal, typically a cap, and at least one second terminal, typically a can, characterized by the present gasket.

In a third aspect the present invention relates to a method of preventing oesophageal injury after accidental ingestion of the present single cell cylindrical battery, in particular of children, or small sized adults, or people with a mental limitation, or people with a prior narrowing of digestive or upper respiratory tract, or in the mouth, or in the nose, or in the pharynx, or in the trachea after aspiration, or in the bronchi after aspiration, comprising providing the present single cell cylindrical battery, preventing short circuit by the at least one switchable electrical conductor (43) providing contact between opposite terminals of the said single cell cylindrical battery in an active state when ingested. A reason that specifically children (or likewise small mammals and human beings) suffer most, is that ingestion of a single battery is found to cause a short circuit in the oesophageal region, where it often becomes lodged and does not pass through the digestive tract. When for instance a button battery is ingested, in particular one with a diameter of 20 mm, the ionically conducting environment of the upper digestive tract of children effectively creates an external short circuit of the battery. This is found to drive a local chemical reaction increasing the pH near one pole of the battery and decreasing the pH near the other pole. The non-physiological pH is found to effectively dissolve the local wall, leading to the injury of adjacent tissue (colliquation).

It is found that upon stress, such as caused by a current of the present battery when ingested, a concentration of electrolytes may actually increase significantly, up to a factor five higher. A typical concentration of electrolytes is in the order of 1-500·10⁻³ mol/l, such as 45-165·10⁻³ mol/l.

The present single cell cylindrical battery provides a simple solution to the above problems, which prevents continuous discharging externally of the present battery, especially when ingested, such as by children. The inventors indicate that typically the external short circuit caused by an ingested battery results in a current peak above 0.2 Ampere, whereas the maximum current use of button cells is approximately 0.1 Ampere at a limited time interval of less than 15 sec, typically less than 5 sec. The invention may be considered to relate to a short that operates within this current window, not affecting the normal working and breaking the short circuit upon ingestion. Therewith the present battery largely prevents injury resulting from discharging externally when ingested, by discharging the battery internally, resulting in only a fraction of the reactions that cause the injury. Most or all of serious injury is therewith prevented, as well as casualties. The present gasket can be integrated in an existing design or new single cell cylindrical battery design without any major external changes, amongst others in view of the internal design of the short. The present battery is therefore safer.

Details of the present single cell cylindrical battery can e.g. be found in IEC60086, which international standard document and its contents are incorporated by reference. The term "watch battery" is considered to be encompassed by the present single cell cylindrically battery. To give some examples: type B or C systems (Li-based) have a nominal voltage of 3.0 V, and end-point voltage of 2.0 V, and an open circuit voltage of 3.00-3.70 V. Type L or S systems (Zn-based) have a nominal voltage of about 1.5 V, and end-point voltage of 1.0/1.2 V, and an open circuit voltage of 1.50-1.70 V. A discharge resistance is in the order 10-100 kΩ.

The present invention provides a solution to one or more of the above-mentioned problems and overcomes drawbacks of the prior art.

Advantages of the present invention are detailed throughout the description.

### DETAILED DESCRIPTION OF THE INVENTION

In an exemplary embodiment of the present gasket a location of the at least one switchable electrical conductor (43) in the gasket is selected from a medial location, a lateral location, and a central location, that is close to or in a cap of the said battery, close to or in the can of the said battery, or substantially in the gasket.

In an exemplary embodiment the present gasket comprises at least one second dielectric material (42), wherein the at least one second dielectric material (42) is configured to provide sealing, in particular wherein the at least one second dielectric material is configured to provide sealing of the electrolyte of said single cell cylindrical battery.

In an exemplary embodiment of the present gasket the at least one second dielectric material (42) is not soluble in water at 37 °C and 100 kPa.

In an exemplary embodiment of the present gasket the at least one first dielectric material (41) and optional second dielectric material (42) is not soluble in at least one of (i) carbonates, in particular linear carbonates, such as ethyl methyl carbonate (EMC), and di-ethyl carbonate (DEC), (ii) carboxylates, in particular carboxylates with different chain lengths, such as methyl acetate (MA), and ethyl acetate (EA), (iii) ethers, such as di-methyl ether (DME), and 1,3 di-oxolane (DOL), (iv) esters, (v) nitriles, such as acetonitrile (AN), proprionitrile (PN), and butyronitrile (BN), (vi) alcohols, such as ethanol, (vii) sulfones, such as ethylmethyl sulfone (EMS), and trimethylsulfone (TMS), (viii) sulfoxides, (ix) sulphites, (x) anhydrides, (xi) fluorinated solvents, such as fluorinated ethylene carbonate (FEC), and fluorinated methyl ethyl carbonate (FEMC), (xii) ketones, (xiii) ionic liquids, (xiv) nitriles, (xv) silicates, and (xvi) aldehydes, and in particular combinations thereof. Examples of solvents are Ethylene Carbonate (EC), Diethyl Carbonate (DEC), Di-methyl Carbonate (DMC), Ethyl Methyl Carbonate (EMC), Propylene Carbonate (PC), Methyl Propyl Carbonate (MPC), Butylene Carbonate (BC), Dipropyl Carbonate (DPC), Ethyl Propyl Carbonate (EPC), Vinylene Carbonate (VC), Methyl Formate (MF), Methyl Acetate (MA), 1,4-Butyrolactone (BL), Methyl Butyrate (MB), Ethyl Propionate (EP), Vinyl Ethylene Carbonate (VEC), 1,3,2-dioxathiolane-2,2-dioxide (DTD), Fluoroethylene Carbonate (FEC), Fluorodiethyl Carbonate (FDEC), Fluorodimethyl Carbonate (FDMC), Fluoroethyl Methyl Carbonate (FEMC), Fluoropropylene Carbonate (FPC), Fluoromethyl Propyl Carbonate (FMPC), Fluorobutylene Carbonate (FBC), Fluorodipropyl Carbonate (FDPC), Fluoroethyl Propyl Carbonate (FEPC), Fluorovinylene Carbonate (FVC), Fluoromethyl Formate (FMF), Fluoromethyl Acetate (FMA), Fluoro-1,4-Butyrolactone (FBL), Fluoromethyl Butyrate (FMB), Fluoroethyl Propionate (FEP), Fluorinated Vinyl Ethylene Carbonate (FVEC), Di-methyl ether (DME), Diethyl ether (DEE), Dipropyl ether (DPE), Methyl ethyl ether (MEE), Methyl propyl ether (MPE), Diethylene glycol dimethyl ether (DEGDME), Tetraethylene glycol dimethyl ether (TEGDME), Tetrahydrofuran (THF), Dioxolane (DOL), Fluorinated Dimethyl ether (FDME), Fluorinated Diethyl ether (FDEE), Fluorinated Dipropyl ether (FDPE), Fluorinated Methyl ethyl ether (FMEE), Fluorinated Methyl propyl ether (FMPE), Fluorinated Diethylene glycol dimethyl ether (FDEGDME), Fluorinated Tetraethylene glycol dimethyl ether (FTEGDME), Fluorinated Tetrahydrofuran (FTHF), Fluorinated Dioxolane (FDOL), Dimethyl sulfone (DMS), Ethyl methyl sulfone (EMS), Tetramethylene sulfone (TMS), Ethylene sulfite (ES), propyl sulfone (PS), Propylmethyl sulfone (PMS), Isopropyl sulfone (IS), Dimethyl sulfoxide (DMSO), Methylsulfonylmethane (MSM), Sulfolane (SL), Phenyl trifluoromethyl sulfide (PTS), Fluorinated Dimethyl sulfone (FDMS), Fluorinated Ethyl methyl sulfone (FEMS), Fluorinated Tetramethylene sulfone (FTMS), Fluorinated Di-methyl sulfoxide (FDMSO), Fluorinated Methylsulfonylmethane (FMSM), Fluorinated Sulfolane (FSL), Fluorinated sulfone 3,3,3-trifluoropropylmethyl sulfone (FPMS), Trifluoromethyl ethyl sulfone (FMES), Trifuoromethyl propyl sulfone (FMPS), Trifluoromethanesulfonic anhydride (TFMSA), Trifluoromethyl isopropyl sulfone (FMIS), Fluorinated Phenyl trifluoromethyl sulfide (FPTS), Triethyl phosphate (TEP), Trimethyl phosphate (TMP), Dimethyl methyl phosphate (DMMP), Diethyl ethylphosphonate (DEEP), Tripropargyl phosphate (TPP), Ethylene ethyl phosphate (EEP), Triamyl phosphate (TAP), Tributyl phosphate (TBP), Fluorinated Triethyl phosphate (FTEP), Fluorinated Trimethyl phosphate (FTMP), Fluorinated Dimethyl methyl phosphate (FDMMP), Fluorinated Diethyl ethylphosphonate (FDEEP), Fluorinated Tripropargyl phosphate (FTPP), Fluorinated Ethylene ethyl phosphate (FEEP), Fluorinated Triamyl phosphate (FTAP), Fluorinated Tributyl phosphate (FTBP), Alkylmethylimidazolium, Alkylmethylpyrrolidinium, Ammonium (ether functionalized), Ammonium Phosphonium, Spirocyclic ammonium, Anions group commonly used in ionic liquids: [FSI]-, [TFSI]-, [DCA]-, [PF6]-, [BF4]-, [NO3]-, Hydrofluoroethers (HFEs), 1,1,2,2-tetrafluoroethyl-2,2,3,3-tetrafluoropropyl ether (TTE), bis(2,2,2-trifluoroethyl) ether (BTFE), Tris(pentafluorophenyl)phosphine (TPFP), Tris(2,2,2-trifluoroethyl)phosphate (TTFEP), Acetonitrile (AN), Propionitrile (PN), 1,5-dicyano pentane (DCP), Adiponitrile (ADN), Tri ethoxy(octyl)silane (TEOS), and Tetraethyl orthosilicate (TEtOS)).

In an exemplary embodiment of the present gasket the at least one first dielectric material 41 and optional second dielectric material 42 provide sealing at a full circumference of the gasket.

In an exemplary embodiment the present gasket is configured to fit to, and/or around, a can of a single cell cylindrical battery, in particular a button cell, or configured to fit to a cap of a single cell cylindrical battery, in particular a button cell.

In an exemplary embodiment of the present gasket the at least one first dielectric material (41) and optional second dielectric material (42) provide hermetic sealing.

In an exemplary embodiment of the present gasket the switchable electrical conductor (43) comprises an electrical material selected from a conductive material, in particular selected from a metal, such as Fe, Zn, Ni, Ag, Ti, Cu, Cr, and Al, from metal alloys, in particular comprising 0.002-3 wt.% C, and comprising at least one metal selected from Mo, Mn, B, Ti, V, Nb, Cr, Al, Cu, Si, Co, W, and, Ni, in an amount of total metal of 0-10 wt.%, and from combinations thereof.

In an exemplary embodiment of the present gasket the conductive material is reversibly flexed. An example of such a material is Nitinol; of Evek GmbH, which is a NiTi alloy.

In an exemplary embodiment of the present gasket the conductive material has a flexural modulus of 30-300 MPa, and/or a Modulus of elasticity of 30-100 GPa, and/or a yield stress of 50-200 MPa.

In an exemplary embodiment of the present gasket the conductive material has an electrical resistance of <0.5 10⁻⁶ Ω*m (@ 20 °C), in particular <0.3 10⁻⁶ Ω*m, more in particular <0.2 10⁻⁶ Ω*m. It is noted that e.g. for Cu this is 1.68 10⁻⁸ Ω*m, for Fe it is 9.7 10⁻⁶ Ω*m; for sea water it is 2.1 10⁻¹ Ω*m, and thus inherently it is >~ 1 10⁻⁸ Ω*m.

In an exemplary embodiment of the present gasket the conductive material has a thickness from 0.05-0.3 mm, such as 0.1-0.25 mm, such as 0.15-0.2 mm, and/or the conductive material, or the relevant electrical part in view of the contact to be established, has a height from 0.05-2 mm, such as 0.1-1 mm, such as 0.15-0.5 mm.

In an exemplary embodiment of the present gasket the conductive material is a memory metal.

In an exemplary embodiment of the present gasket the conductive material comprises a material resistant to corrosion, in particular to oxidation to air, more in particular selected from stainless steel, and Ni and/or Cr comprising metals.

In an exemplary embodiment of the present gasket a shape of the conductive material is selected from a band, a cylinder, a horseshoe shaped, parts thereof, and combinations thereof.

In an exemplary embodiment of the present gasket the conductive material may comprise a multitude of protrusions, in particular wherein protrusions are configured to provide conductive material extension with a shape selected from rectangular, horseshoe shaped, hook-shaped, spiral, deltoid, triangular, and combinations thereof.

In an exemplary embodiment of the present gasket protrusions are evenly distributed over a circumference of the conductive material.

In an exemplary embodiment of the present gasket the switchable electrical conductor (43) is configured to provide electrical conductance between a said can and a said cap in an active state, wherein conductance is provided between one end of the electrical conductor and an-other end of the electrical conductor.

In an exemplary embodiment of the present gasket the at least one first dielectric material (41) and optional second dielectric material (42) comprise a material selected from at least one polymeric material, in particular selected from polyvinyls, such as polyethylene (PE), and polypropylene (PP), poly carboxylic acids, such as poly vinyl acetate (PVA), poly ethylene ester (PEE), and poly lactic acid (PLA). The polymeric materials typically have a molecular mass of < 23 kDa, in particular < 13 kDa, such as < 6 kDa. For instance, Sigma-Aldrich PVA 363170 may be used. Even further, the polymeric materials are typically capable of forming a film, in particular an aqueous film. More in particular, the at least one polymeric material is hydrophilic. An approximate rule of thumb for hydrophilicity of organic compounds is that solubility of a molecule in water is more than 1 mass %. Further, typically the at least one polymeric material is lipophilic. The at least one first dielectric material may further comprise 0.1-80 wt.% of at least one additive, in particular 0.2-40 wt.%, more in particular 1-20 wt.% such as 5-12 wt.%. Such an additive may be selected from saccharides, such as inuline, dextran, and pullulan, from salts, from ethers, from esters, from disintegrants, from cellulose, from grafted celluloses, such as carboxymethyl cellulose, and combinations thereof. Typically the additive has a molecular mass of < 3kDa, typically < 1 kDa.

In an exemplary embodiment of the present single cell cylindrical battery the at least one central switchable electrical conductor 43 is confined in a space between the cap 24 and the can 23. That is, typically the space taken up by the gasket is such that a smallest distance between the can and the cap, such as at a top end of the battery, which is typically the distance 49 of the external surface of the gasket, bridging the smallest distance in order to close the space between the cap and can, is smaller than a smallest dimension of the switchable electrical conductor, typically the cross-sectional width of the switchable electrical conductor 43, so that it cannot escape from the confined space taken up by the gasket towards a location outside of the battery after dissolution of the first dielectric material 42. This is particularly relevant if the electrical conductor is fully incorporated in the first dielectric material. When the switchable electrical conductor 43 is attached to either the can or the cap the attachment of this medial and lateral configuration should be such that they remain fixed in their position after dissolution of the first dielectric material 42.

In an exemplary embodiment of the present single cell cylindrical battery the location of the at least one switchable electrical conductor (43) in the gasket is selected from incorporated in the cap, incorporated in the can, and incorporated in the gasket.

In an exemplary embodiment of the present single cell cylindrical battery the at least one switchable electrical conductor (43) forms part of one of the can, the cap, and the gasket.

In an exemplary embodiment the present single cell cylindrical battery comprises at least one positive electrode (eₚ), at least one negative electrode (eₙ), in between said electrodes at least one solid or fluid electrolyte (eₗ), a cap providing at least one positive terminal (tₚ) in electrical contact with the at least one positive electrode, and a can providing at least one negative terminal (tₙ) in electrical contact with the at least one negative electrode.

In an exemplary embodiment of the present single cell cylindrical battery the anode comprises a conductive material such as Ag, OH⁻, Hg, Zn, Li, or a combination thereof. In general, the term anode may refer to the cathode, and vice versa, depending on the convention used and the precise electrochemical configuration. Therefore, in so far as applicable, the one may refer to the other.

In an exemplary embodiment of the present single cell cylindrical battery the electrode each individually comprise a conductive material such as Zn, Li, Mn, Ni, Ag, C, Cu, or oxides thereof, or fluorides thereof.

In an exemplary embodiment of the present single cell cylindrical battery the battery provides a nominal voltage of 0.1-5 V, preferably 1-4V, such as 2-3 V and/or a current of 100-2000 mA, preferably 150-1000 mA, such as 200-500 mA, and/or a capacity of 100-2000 mAh, preferably 150-1000 mAh, such as 200-500 mAh. It is noted that even batteries that under intended circumstances do not provide much power anymore, and hence may be considered to be functionally unusable, still can cause the injuries mentioned, such as upper digestive tract injuries.

In an exemplary embodiment of the present single cell cylindrical battery the single cell cylindrical battery has a diameter of 4-44 mm, preferably 5.8-24.5 mm, more preferably 7.9-23.0 mm, such as 10.0-20.0 mm (diameter typically ±0.15 mm), and a height of 1-10 mm, preferably 1.6-5.4 mm, more preferably 2.5-3.2 mm, as these types of batteries are found to cause most of the injuries and so on. In particular batteries of types YY20XX, such as CR20XX, and in particular CR2012, CR2016, CR2020, CR2025, and CR2032 are considered.

In an exemplary embodiment the present single cell cylindrical battery comprises a housing for providing structural integrity, such as wherein the at least one positive electrode is a can and the at least one negative electrode is a cap.

In an exemplary embodiment of the present single cell cylindrical battery an optical fuse symbol at an outside of the battery is provided, in particular a fuse system according to fig. 6.

In an exemplary embodiment of the present single cell cylindrical battery an optical symbol at an outside of the battery is provided indicative of a broken fuse.

The invention will hereafter be further elucidated through the following examples which are exemplary and explanatory of nature and are not intended to be considered limiting of the invention. To the person skilled in the art, it may be clear that many variants, being obvious or not, may be conceivable falling within the scope of protection, defined by the present claims.

### FIGURES

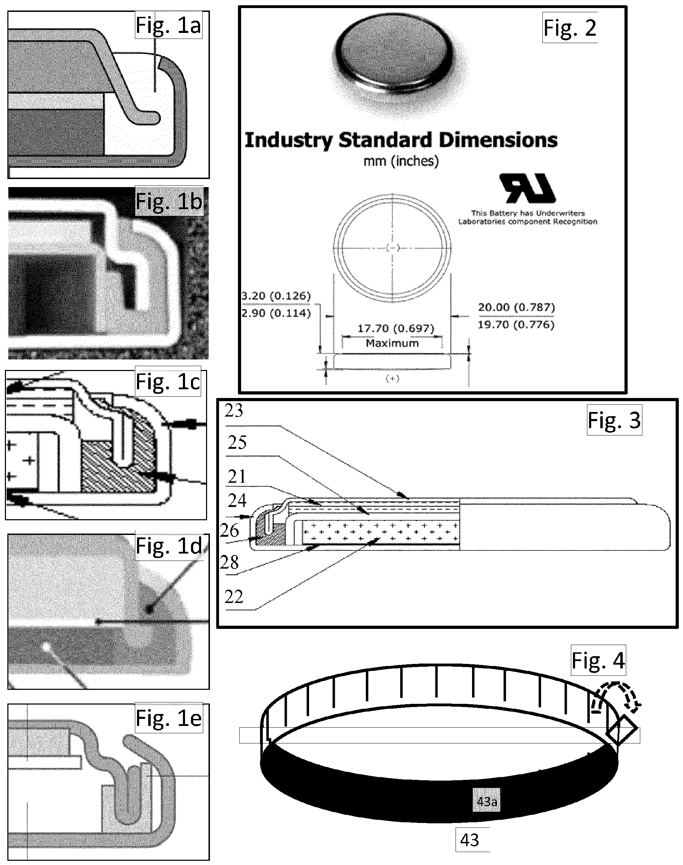

Figure 1a-e, 2-4, 5a-c, 6a-b, 7, 8a-b, 9a-c, 10, 11a-d, and 12a-i, show schematics of the present device as well as generic parts thereof,.

### DETAILED DESCRIPTION OF FIGURES

In the figures:
- eₚ: at least one positive electrode
- eₙ: at least one negative electrode
- eₗ: in between said electrodes at least one solid or fluid electrolyte
- tₚ: at least one positive terminal in electrical contact with the at least one positive electrode
- tₙ: at least one negative terminal in electrical contact with the at least one negative electrode
- d: at least one dielectric layer

- 100: Single cell cylindrical battery
- 1: fuse top
- 2: fuse bottom
- 3: top contact fuse
- 4: centre contact fuse
- 5: fuse wire
- 6: bottom contact fuse
- 7: ring contact fuse
- 10: fuse
- 11: fuse bottom part
- 12: fuse top part
- 21: anode
- 22: cathode
- 23: bottom cup
- 24: top cup
- 25: separator
- 26: insulating gasket
- 28: collector
- 41: first dielectric material
- 42: second dielectric material
- 43: electrical conductor, e.g. circular spring/memory within gasket
- 43a: reversible flexible protrusion
- 44: point of contact between anode and cathode
- 45: fuse located within bottom cup
- 46: fuse located around top cup

- 49: gasket outlet; smallest opening

Figs. 1a-e show schematic cross-sections of commercial prior art button cells. In particular a cap, can and gasket are shown, as well some aspects of an interior of a battery. Designs are considered to vary with respect to some of the details, in particular the design of the side of the bottom cup, and of the gasket. The gasket is filled with one material. In reality cross-section look different.

Fig. 2 shows industry standard dimensions.

Fig. 3 shows a schematic lay-out of a button cell comprising an anode 21, a cathode 22, a bottom cup 23, a top cup 24, a separator 25, an insulating gasket 26, and a collector 28.

Fig. 4 shows an exemplary switchable electrical conductor in ring form, having protrusions 43a with substantial rectangular shape. In an embodiment the reversible flexible protrusion 43a is in passive state when upright, being flexed, whereas if dielectric 41,42 dissolves (not shown) flexing is released and protrusion 43a in an example bends outwards, therewith connecting cap and can (not shown) electrically, providing a fuse.

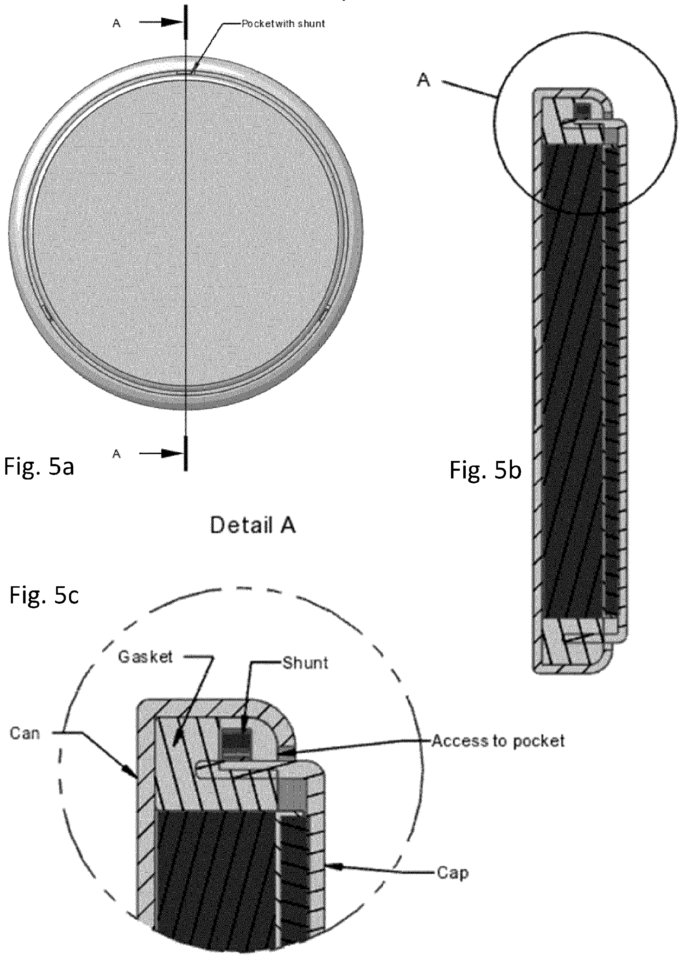

Fig. 5a show a top view of a button cell, fig. 5b a cross-section A-A, and fig. 59c a detail showing the can, a gasket, the present shunt, access to the pocket through an opening, and the cap. The shunt is surrounded by a dielectric material between the positive terminal and the negative terminal, wherein said dielectric material is soluble in water or saliva.

Figure 6a shows a schematic layout of a typical single cell cylindrical battery, with a height and diameter.

Figure 6b shows a detailed cross-sectional layout with a single cell cylindrical battery, such as a button cell or a button battery, comprising at least one positive electrode (eₚ), at least one negative electrode (eₙ), in between said electrodes at least one solid or fluid electrolyte (eₗ), at least one positive terminal (tₚ)in electrical contact with the at least one positive electrode, and at least one negative terminal (tₙ) in electrical contact with the at least one negative electrode.

Fig. 7 shows three typically used symbols for an electrical fuse.

Fig. 8a shows yet another embodiment of present electrical conductor 43, with reversible flexible protrusions 43a; only one is shown, but typically protrusions are provided around the circumference of conductor 43. In the example the reversible flexible protrusion 43a is in passive state when upright, being flexed, whereas if dielectric 41,42 dissolves (not shown) flexing is released and protrusion 43a in an example bends outwards, therewith connecting cap and can (not shown) electrically, providing a fuse.

Fig. 8b shows yet another embodiment of present electrical conductor 43, with reversible flexible protrusions 43a; only one is shown, but typically protrusions are provided around the circumference of conductor 43. In the example the reversible flexible protrusion 43a is in passive state when substantially parallel, being flexed, whereas if dielectric 41,42 dissolves (not shown) flexing is released and protrusion 43a in an example bends outwards, therewith connecting cap and can (not shown) electrically, providing a fuse.

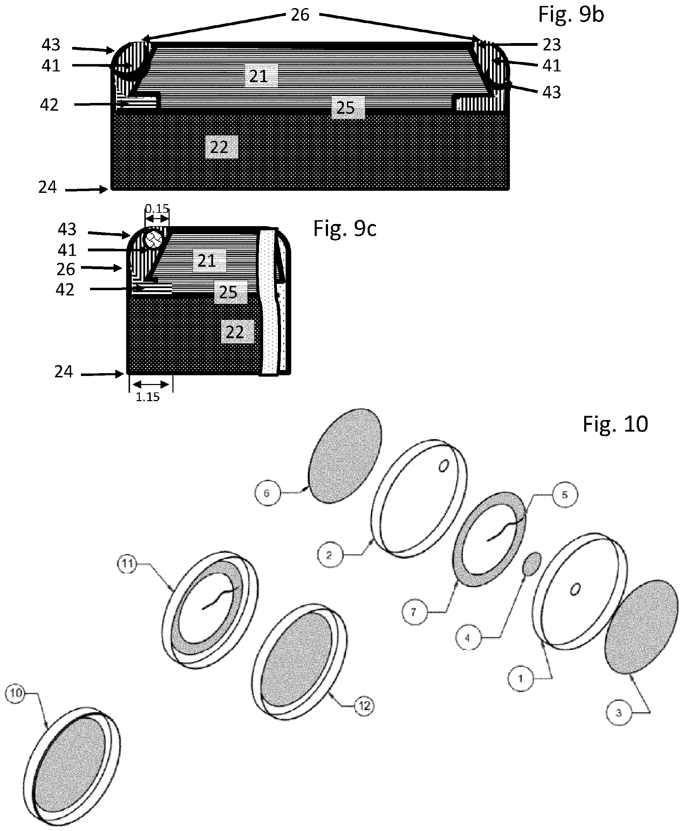

Fig. 9a shows an exemplary button cell battery with the present conductive material 43, as detailed above, comprising an anode 21, a cathode 22, a top and bottom cup 23,24, a separator 25 and gasket 26. At the right side one (first) dielectric material is provided, at the left side two (41 and 42). The conductive material is attached to the bottom cup, whereas in fig. 9b it is attached to the top cup. At the left side is provided in (upper) dielectric material 41 (dielectric material 42 being present in a lower section of the gasket), whereas at the right side only dielectric material 41 is present. Fig. 9c shows typical dimensions of a gasket (1.15 mm) and of a thickness of 0.15 mm of the conductive material.

Fig. 10 show details of the present fuse. Therein an example is built up of small elements. The fuse 10 is formed as a circular-shaped element which can be integrated/incorporated within an existing battery. An example for the battery taken is a CR2032. The fuse has a fuse bottom part 11 and a fuse top part 12. Therein elements as a fuse top 1, a fuse bottom 2, a fuse top contact 3, a fuse centre contact 4, a fuse wire 5, a fuse bottom contact 6, and a fuse ring contact 7 can be seen. The fuse itself electrically contacts ring 7 and centre 4. The whole fuse is in contact with an electrical terminal of the battery by bottom contact 6 and with an adjacent electrode of the battery by contact 3. The fuse bottom 2 and fuse top 1 are typically made of an electrically insulating material, such as a dielectric, or cellulose, as explained in the description. An electrical current therefore passes from a terminal to contact 6, to ring contact 7, via the fuse 5 to central contact 4, then to fuse top contact 3, and further to an electrode.

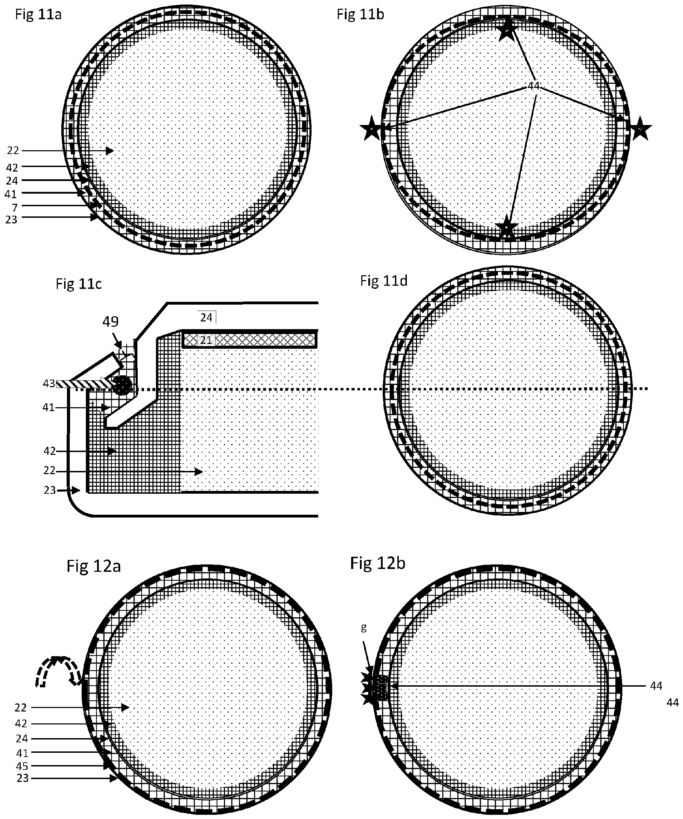

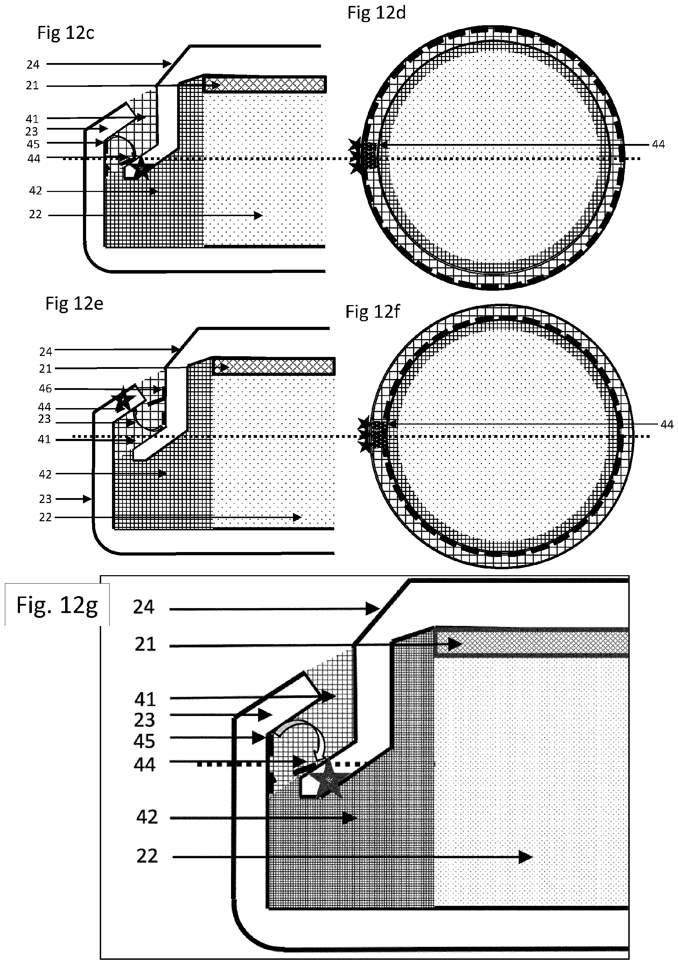

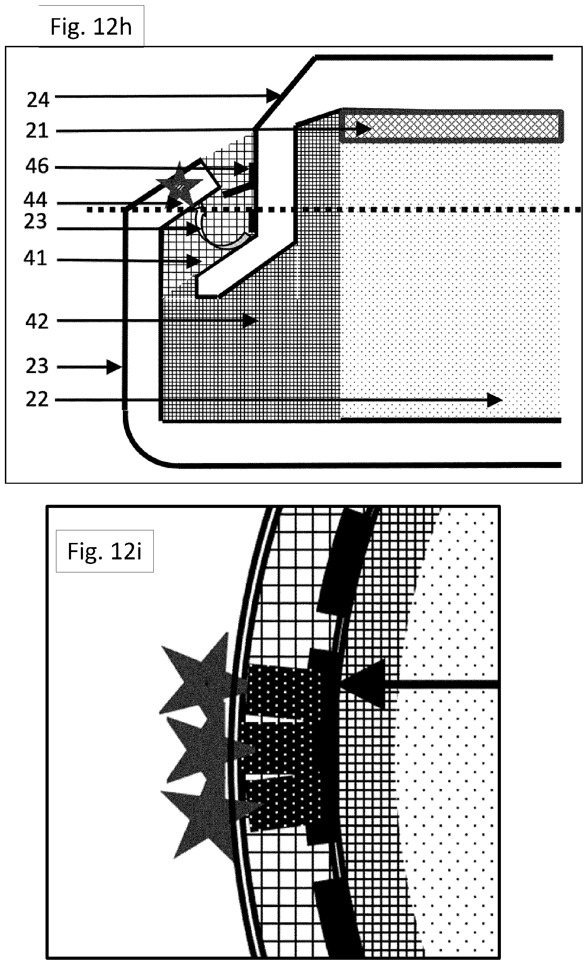

Figs. 11a,b, 12a,bshow a passive (left) and an active (right, having a short *) state of the present conductive material and a cross-section (11(c) of fig. 11d, dotted line). In figs. 11a-12a, from inside to outside, a positive terminal tp, a polymer 42, a cap 23, a conductive material 43, a polymer 41, and a can 24 are shown, in passive state, whereas in fig. 11b-123b the conductive material is deflexed and contacts the cap and the can. Fig. 11 shows an embodiment wherein a substantially circular, typically cylindrical, conductive material is deflexed into an oval shaped form contacting at a left and right side thereof the bottom cup and contacting at a top and bottom side thereof the top cup. Fig. 12 shows a similar embodiment as of fig. 11, wherein said conductive material flexes into a more oval shaped form, therewith providing shorts on at least one of the longer and shorter sides of the oval. Figs. 12 d and f provide further embodiments, with cross-sections thereof (dotted line) in Figs. 12c and12e respectively. Fig. 12g shows an enlargement of fig. 12c, Fig. 12h shows an enlargement of fig. 12e, and fig. 12i shows an enlarged detail of fig. 12f.

## Claims

1. A gasket (26) for a said single cell cylindrical battery, comprising
At least one first dielectric material (41), wherein said at least one first dielectric material is configured to provide sealing, **characterized in that**
The at least one first dielectric material (41) is soluble in water at 37 °C and 100 kPa, and
At least one switchable electrical conductor (43) configured for providing contact between opposite terminals of the said single cell cylindrical battery in an active state, and configured for preventing contact between opposite terminals of the said single cell cylindrical battery in a passive state, wherein the conductive material is configured to be reversibly flexed, and incorporated at least partly in said at least one first dielectric material.

2. The gasket according to claim 1, wherein a location of the at least one switchable electrical conductor (43) in the gasket is selected from a medial location, a lateral location, and a central location.

3. The gasket according to any of claims 1-2, comprising at least one second dielectric material (42), wherein the at least one second dielectric material (42) is configured to provide sealing, in particular wherein the at least one second dielectric material is configured to provide sealing of the electrolyte of said single cell cylindrical battery, and/or
wherein the at least one second dielectric material (42) is not soluble in water at 37 °C and 100 kPa.

4. The gasket according to any of claims 1-3, wherein the at least one first dielectric material (41) and optional second dielectric material (42) is not soluble in at least one of (i) carbonates, in particular linear carbonates, such as ethyl methyl carbonate (EMC), and di-ethyl carbonate (DEC), (ii) carboxylates, in particular carboxylates with different chain lengths, such as methyl acetate (MA), and ethyl acetate (EA), (iii) ethers, such as di-methyl ether (DME), and 1,3 dioxolane (DOL), (iv) esters, (v) nitriles, such as acetonitrile (AN), proprionitrile (PN), and butyronitrile (BN), (vi) alcohols, such as ethanol, (vii) sulfones, such as ethylmethyl sulfone (EMS), and trimethylsulfone (TMS), (viii) sulfoxides, (ix) sulphites, (x) anhydrides, (xi) fluorinated solvents, such as fluorinated ethylene carbonate (FEC), and fluorinated methyl ethyl carbonate (FEMC), (xii) ketones, (xiii) ionic liquids, (xiv) nitriles, (xv) silicates, and (xvi) aldehydes, and in particular combinations thereof.

5. The gasket according to any of claims 1-4, wherein the at least one first dielectric material (41) and optional second dielectric material (42) provide sealing at a full circumference of the gasket.

6. The gasket according to any of claims 1-5, configured to fit to a can of a single cell cylindrical battery, in particular a button cell, or configured to fit to a cap of a single cell cylindrical battery, in particular a button cell, and/or
wherein the at least one first dielectric material (41) and optional second dielectric material (42) provide hermetic sealing.

7. The gasket according to any of claims 1-6, wherein the switchable electrical conductor (43) comprises an electrical material selected from a conductive material, in particular selected from a metal, such as Fe, Zn, Ni, Ag, Ti, Cu, Cr, and Al, from metal alloys, in particular comprising 0.002-3 wt.% C, and comprising at least one metal selected from Mo, Mn, B, Ti, V, Nb, Cr, Al, Cu, Si, Co, W, and, Ni, in an amount of total metal of 0-10 wt.%, and from combinations thereof, and/or
Young's modulus E of 30-300 MPa (ASTM E111-17), and/or a Modulus of elasticity of 30-100 GPa (ASTM A36), and/or a yield stress of 50-200 MPa (ASTM A228). and/or
wherein the conductive material has an electrical resistance of <0.5 10⁻⁶ Ω*m (@ 20 °C), in particular <0.3 10⁻⁶ Ω*m, more in particular <0.2 10⁻⁶ Ω*m, and/or
wherein the conductive material has a thickness from 0.05-0.3 mm, such as 0.15-0.25 mm, and/or
wherein the conductive material is a memory metal; and/or
wherein the conductive material comprises a material resistant to corrosion, in particular to oxidation to air, more in particular selected from stainless steel, and Ni and/or Cr comprising metals, and/or
wherein a shape of the conductive material is selected from a cylinder, a horse shoe shaped, a band, parts thereof, and combinations thereof, and/or
wherein the conductive material comprises a multitude of protrusions, in particular wherein protrusions are configured to provide conductive material extension with a shape selected from rectangular, horseshoe shaped, hook-shaped, spiral, deltoid, triangular, and combinations thereof, and/or
wherein protrusions are evenly distributed over a circumference of the conductive material,

8. The gasket according to any of claims 1-7, wherein the switchable electrical conductor (43) is configured to provide electrical conductance between a said can and a said cap in an active state, wherein conductance is provided between one end of the electrical conductor and another end of the electrical conductor.

9. The gasket according to any of claims 1-8, wherein the at least one first dielectric material (41) and optional second dielectric material (42) comprise a material selected from at least one polymeric material, in particular selected from poly vinyls, such as PE, and PP, poly carboxylic acids, such as PVA, PEE, and PLA.

10. A single cell cylindrical battery (100), in particular a button cell or a button battery, or a watch battery, the single cell cylindrical battery comprising at least one first terminal and at least one second terminal, **characterized by**
the gasket according to any of claims 1-9, in particular
wherein the at least one central switchable electrical conductor (43) is confined in a space between the cap (24) and the can (23).

11. The single cell cylindrical battery according to claim 10, wherein the location of the at least one switchable electrical conductor (43) in the gasket is selected from incorporated in the cap, incorporated in the can, and incorporated in the gasket.

12. The single cell cylindrical battery according to claim 11, wherein the at least one switchable electrical conductor (43) forms part of one of the can, the cap, and the gasket.

13. The single cell cylindrical battery (100) according to any of claims 10-12 comprising
at least one positive electrode (eₚ),
at least one negative electrode (eₙ),
in between said electrodes at least one solid or fluid electrolyte (eₗ),
a cap providing at least one positive terminal (tₚ)in electrical contact with the at least one positive electrode, and
a can providing at least one negative terminal (tₙ) in electrical contact with the at least one negative electrode, and/or
wherein the anode comprises a conductive material such as Ag, OH⁻, Hg, Zn, Li, or a combination thereof, and/or
wherein the electrode each individually comprise a conductive material such as Zn, Li, Mn, Ni, Ag, C, Cu, or oxides thereof, or fluorides thereof,

14. The single cell cylindrical battery according to any of claims 10-13, wherein the battery provides a nominal voltage of 0.1-5 V, and/or a current of 100-2000 mA, and/or a capacity of 100-2000 mAh, and/or
wherein the single cell cylindrical battery has a diameter of 4-44 mm, and a height of 1-10 mm, and/or
comprising a housing for providing structural integrity, such as wherein the at least one positive electrode is a can and the at least one negative electrode is a cap.

15. Method of preventing oesophageal injury after accidental ingestion of the single cell cylindrical battery according to any of claims 10-14, in particular of children, or small sized adults, or people with a mental limitation, or people with a prior narrowing of digestive or upper respiratory tract., or in the mouth, or in the nose, or in the pharynx, or in the trachea after aspiration, or in the bronchi after aspiration, comprising
providing the single cell cylindrical battery according to any of claims 10-14,
preventing short circuit by the at least one switchable electrical conductor (43) providing contact between opposite terminals of the said single cell cylindrical battery in an active state when ingested.
